# EUROPÄISCHE PATENTANMELDUNG

(11) **EP 0 813 203 A1**
(43) Veröffentlichungstag der Anmeldung: **17.12.1997**
(21) Anmeldenummer: 97108924.8
(22) Anmeldetag: 03.06.1997
(51) Int. Cl.: G11B 33/08, F16F 7/14

(54) **Elektronisches Gerät mit Massenspeicher**

(30) Priorität: 13.06.1996 DE 29610411 U
(71) Anmelder: SIEMENS AKTIENGESELLSCHAFT, 80333 München (DE)
(72) Erfinder: Schmidt, Martin, Dipl.-Ing., 91056 Erlangen (DE); Masatz, Joachim, 91315 Höchstadt (DE)

(57) **Zusammenfassung**

Ein mechanischer Massenspeicher, insbesondere eine Festplatte (F), wird dadurch sicher vor äußeren mechanischen Beanspruchungen geschützt, daß sie schwingend und gedämpft gelagert wird. Dabei zeigt sich, daß als einfaches und kostengünstiges Lagerungselement Drahtseil-Schwingungsdämpfer (D) besonders günstig sind.

## Beschreibung

Die Erfindung bezieht sich auf ein elektronisches Gerät mit einem in dessen Gehäuse integriertem, mechanischem Massenspeicher, der mit einer Halterung versehen ist, die jeweils erste Angriffspunkte für Federelemente aufweist, deren jeweils zweite Angriffspunkte stationär im Gehäuse angeordnet sind, wobei Schwingungsdämpfer zwischen Halterung und Gehäuse vorgesehen sind.

Mechanische Massenspeicher, z.B. Festplatten, Diskettenlaufwerke und CD ROMS, sind gängige Bestandteile von Personal-Computern. Heutzutage werden derartige Massenspeicher auch in industriellen elektronischen Steuerungen, z.B. in Steuerungen für Werkzeugmaschinen oder Roboter, eingesetzt. Wegen der rauhen Umgebungseinflüsse bei diesen industriellen Steuerungen ist es jedoch erforderlich, die elektronisch-mechanischen Massenspeicher gegen äußere Rüttel- bzw. Schockbeanspruchungen zu schützen.

In diesem Zusammenhang ist ein Gerät der eingangs genannten Art aus dem DE-GM 92 03 420 bereits bekannt. Dabei wird ein Festplattenlaufwerk über vier radial ausgerichtete Federn in einem Rahmenausschnitt gehalten. Auch die Verwendung von zusätzlichen Schwingungsdämpfern wird dort vorgeschlagen, jedoch wird nichts über die Ausbildung einer solchen Feder-Dämpfer-Anordnung ausgesagt.

Wenn sich nun jedoch dem Konstrukteur die Aufgabe stellt, eine solche federnde und dämpfende Anordnung für härtesten industriellen Einsatz zu schaffen, bietet es sich als naheliegend an, neben den Federn zusätzliche Dämpfungselemente vorzusehen. Eine solche Anordnung würde jedoch technisch relativ kompliziert und dementsprechend kostenaufwendig sein.

Aufgabe der Erfindung ist es, ein Gerät der eingangs genannten Art so auszugestalten, daß in technisch äußerst einfacher Weise eine dämpfend federnde Aufhängung für mechanische Massenspeicher ermöglicht ist.

Gemäß der Erfindung wird diese Aufgabe dadurch gelöst, daß als Federelemente Drahtseil-Schwingungsdämpfer vorgesehen sind.

Derartige Drahtseildämpfer sind zwar im militärischen Bereich seit langem im Einsatz, jedoch haben sie noch keinen Einsatz bei industriellen Steuerungen gefunden.

Eine erste Ausbildung der Erfindung ist dadurch gekennzeichnet, daß jeder Drahtseil-Schwingungsdämpfer als längsgestreckte Schlaufe mit aufeinander zugebogenen Enden ausgebildet ist. Dadurch ergeben sich günstige Schwing- und Dämpfungseigenschaften und das Bauvolumen kann relativ klein gehalten werden.

Dadurch, daß die Drahtseil-Schwingungsdämpfer näherungsweise radial zueinander angeordnet sind, kann mit nur vier Drahtseil-Schwingungsdämpfern ein sicheres räumliches Verspannen eines quaderförmigen mechanischen Massenspeichers gewährleistet werden.

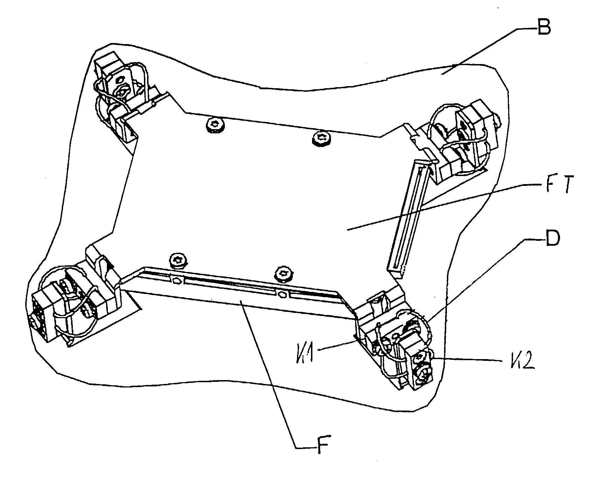

Ein Ausführungsbeispiel der Erfindung ist in der Zeichnung dargestellt und wird im folgenden näher erläutert.

In der einzigen Darstellung ist perspektivisch gezeigt, wie eine Festplatte F über vier Schrauben an einen Festplattenträger FT befestigt ist, der über vier radial angeordnete Aufhängungen mit einem der Übersichtlichkeit halber nicht weiter gezeichneten Gehäuse, beispielsweise über dessen Basis B verbunden ist.

Die Aufhängungen, von denen nur eine im einzelnen bezeichnet ist, beinhalten als Kernelement jeweils einen Drahtseil-Schwingungsdämpfer D, der ein verlitztes Drahtseil aufweist, das zu einer geschlossenen Kontur geformt ist, die längsgestreckt schlaufenförmig gezogen wird, wobei dann wiederum die Schlaufenenden aufeinander zugebogen werden. Sowohl das ursprüngliche Mittelstück zwischen den beiden Schlaufen als auch die Schlaufenenden werden dann jeweils in Klemmstücken K1 und K2 gehalten, von denen das Klemmstück K1 am Festplattenträger FT angeordnet ist und das Klemmstück K2 an der Basis B befestigt ist.

## Patentansprüche

1. Elektronisches Gerät mit einem in dessen Gehäuse integriertem mechanischem Massenspeicher, der mit einer Halterung versehen ist, die jeweils erste Angriffspunkte für Federelemente aufweist, deren jeweils zweite Angriffspunkt stationär im Gehäuse angeordnet sind, wobei Schwingungsdämpfer zwischen Halterung und Gehäuse vorgesehen sind, **dadurch gekennzeichnet,** daß als Federelemente Drahtseil-Schwingungsdämpfer (D) vorgesehen sind.

2. Gerät nach Anspruch 1, **dadurch gekennzeichnet,** daß jeder Drahtseil-Schwingungsdämpfer als längsgestreckte Schlaufe mit aufeinander zugebogenen Enden ausgebildet ist.

3. Gerät nach Anspruch 1 oder 2, **dadurch gekennzeichnet,** daß die Drahtseil-Schwingungsdämpfer näherungsweise radial zueinander angeordnet sind.
